(19) Europäisches Patentamt
European Patent Office
Office européen des brevets

(11) **EP 3 155 803 B1**

(12) **EUROPÄISCHE PATENTSCHRIFT**

(45) Veröffentlichungstag und Bekanntmachung des Hinweises auf die Patenterteilung:
**01.08.2018  Patentblatt 2018/31**

(21) Anmeldenummer: **15736206.2**

(22) Anmeldetag: **11.06.2015**

(51) Int Cl.:
***H04N 5/232*** (2006.01)

(86) Internationale Anmeldenummer:
**PCT/EP2015/063081**

(87) Internationale Veröffentlichungsnummer:
**WO 2015/189339 (17.12.2015 Gazette 2015/50)**

(54) **VERFAHREN ZUR TRANSFORMATION EINER BEWEGTBILDSEQUENZ SOWIE BEWEGTBILDSEQUENZ-TRANSFORMATIONSVORRICHTUNG**

METHOD FOR THE TRANSFORMATION OF A MOVING IMAGE SEQUENCE AND MOVING IMAGE SEQUENCE TRANSFORMATION DEVICE

PROCÉDÉ DE TRANSFORMATION D'UNE SÉQUENCE D'IMAGES ANIMÉES AINSI QUE DISPOSITIF DE TRANSFORMATION DE SÉQUENCES D'IMAGES ANIMÉES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.06.2014   DE 102014108189**

(43) Veröffentlichungstag der Anmeldung:
**19.04.2017   Patentblatt 2017/16**

(73) Patentinhaber: **Prodad GmbH**
**78194 Immendingen (DE)**

(72) Erfinder:
• **BURKARTH, Holger**
  **78194 Immendingen (DE)**
• **HUBER, Andreas**
  **78194 Immendingen (DE)**

(74) Vertreter: **Patentanwälte Behrmann Wagner PartG mbB**
**Maggistraße 5**
**Hegau-Tower (10. OG)**
**78224 Singen (DE)**

(56) Entgegenhaltungen:
**US-A1- 2004 218 062      US-A1- 2009 160 957**
**US-A1- 2011 267 514**

• **SIMON BAKER ET AL: "Removing rolling shutter wobble", 2010 IEEE CONFERENCE ON COMPUTER VISION AND PATTERN RECOGNITION (CVPR), 13-18 JUNE 2010, SAN FRANCISCO, CA, USA, IEEE, PISCATAWAY, NJ, USA, 13. Juni 2010 (2010-06-13), Seiten 2392-2399, XP031725761, ISBN: 978-1-4244-6984-0**

**Beschreibung**

Die vorliegende Erfindung betrifft ein Verfahren zur Transformation einer Bewegtbildsequenz gemäß Anspruch 1 und außerdem eine Bewegtbildsequenz-Transformationsvorrichtung gemäß Anspruch 12.

Kameravorrichtungen mit einem digitalen Bildsensor zum Aufzeichnen eines Videos bzw. einer Bewegtbildsequenz, also einer Mehrzahl zeitlich aufeinanderfolgend in einem Speicher bzw. Speichermedium aufgezeichneter Einzelbilder, finden heutzutage weite Verwendung.

In solchen Kameravorrichtungen, wie beispielsweise eine Digitalkamera oder ein Smartphone, werden bezüglich der Bilderfassungstechnik unterschiedliche Bildsensortypen eingesetzt.

Bei einem CCD-Bildsensor wird ein zweidimensionales, sich also entlang einer horizontalen und dazu orthogonal ausgerichteten, vertikalen Achse erstreckendes Einzelbild einer Bewegtbildsequenz zu einem vorgegebenen Zeitpunkt bzw. zeitlichen Augenblick erfasst, so dass die das Einzelbild bildenden Bildpunkte für ein jeweiliges Einzelbild der Bewegtbildsequenz exakt einem einzigen Erfassungszeitpunkt zugeordnet sind.

Im Gegensatz zum CCD-Bildsensor wird bei einer Aufzeichung einer Bewegtbildsequenz mit einem CMOS-Sensor jedes Einzelbild der Bewegtbildsequenz bildabschnittweise, insbesondere zeilenweise, erfasst, wobei aufgrund der Entladungsträgheit des CMOS-Sensors zwei in vertikaler Bildrichtung aufeinander folgende Bildzeilen nur mit einem Zeitversatz zueinander, also nicht zu exakt demselben Zeitpunkt, erfasst werden können. Beim Einsatz eines CMOS-Sensors zur Bewegtbildsequenzerfassung werden die aufeinander folgenden Zeilen eines Einzelbildes somit zu unterschiedlichen Zeitpunkten erfasst. Innerhalb einer jeweiligen, sich horizontal erstreckenden Zeile eines CMOS-Sensors werden hingegen die eine Zeile des Einzelbildes bildenden Informationen quasi zu demselben Zeitpunkt, also ohne Zeitversatz in der horizontalen Richtung ausgelesen.

Das zeilenweise Erfassen einer Bildinformation zu unterschiedlichen Zeitpunkten in Abhängigkeit von der vertikalen Zeilenposition innerhalb des jeweiligen Einzelbildes ist prinzipiell problematisch für die Aufzeichnung einer Sequenz bewegter Bilder, also einer Bewegtbildsequenz. Bewegt sich beispielsweise ein in der Bewegtbildsequenz auf mehreren aufeinanderfolgenden Einzelbildern aufgezeichnetes Objekt in den aufgezeichneten Einzelbildern vertikal von oben nach unten, so wird das Objekt anfangs in vertikal weiter oben bzw. höher liegenden Bildzeilen und somit zu relativ frühen Zeitpunkten innerhalb eines dem jeweiligen Einzelbild zugeordneten Erfassungszeitintervalls erfasst. Während der vertikalen Abwärtsbewegung des Objektes wird das Objekt zu einem zunehmend relativ späteren Zeitpunkt innerhalb des Erfassungszeitintervalls eines jeweiligen Einzelbildes erfasst, weil das Objekt im jeweiligen Einzelbild in einer vertikal weiter unten liegenden Bildzeile erfasst wird.

Beim Aufzeichnen einer Bewegtbildsequenz mit einem CMOS-Sensor mit einer zeilenbasierten Einzelbilderfassung ist die aufgezeichnete Bewegtbildsequenz daher häufig verzerrt. Erfasst man beispielsweise aus einem fahrenden Auto heraus einen stationären Gegenstand, beispielsweise einen sich strikt vertikal erstreckenden und stationären Laternenpfahl, so wird der Laternenpfahl in den jeweiligen Einzelbildern schräg gestellt, und somit, von seiner strikt vertikalen Ausrichtung abweichend, verzerrt aufgezeichnet. Ein für den oben geschilderten Fall gleichzeitig in der Bewegtbildsequenz erfasster Außenspiegel des Autos wird hingegen ohne eine derartige Verzerrung in den jeweiligen Einzelbildern erfasst, wenn zwischen dem die Bewegtbildsequenz zeilenweise aufzeichnenden CMOS-Sensor und dem Rückspiegel keine Relativbewegung stattfindet. Diese durch die zeilenweise Einzelbildaufzeichnung verursachte Verzerrungsproblematik wird auch als Rolling-Shutter-Problem bezeichnet.

Besonders problematisch für die Bildqualität einer mit einem CMOS-Sensor bildzeilenweise aufgezeichneten Bewegtbildsequenz sind Verwackelungen bzw. Erschütterungen des CMOS-Sensors relativ zu der aufgezeichneten Umgebung in vertikaler Richtung. Aufgrund der über alle Bildzeilen erfolgenden zeilenweise zeitversetzten Erfassung jeweiliger Einzelbilder kommt es hierbei nicht nur zu den oben geschilderten Verzerrungen sondern insbesondere zu starken Verwackelungen und Stauchungen der Einzelbilder der Bewegtbildsequenz.

Aus der US 2009/160957 A1 ist ein Verfahren zur Transformation einer Bewegtbildsequenz zur Bildentzerrung und zur Bildstabilisierung bekannt, wobei insbesondere Bewegungsartefakte bei Bewegtbilderfassung mit Rolling-Shutter-Verfahren unter Nutzung eines vorhergehenden oder nachfolgenden Bildes eines jeweiligen aktuellen Bildes korrigiert werden. Dies geschieht in Form eines Transformationsprozesses mit einer Transformationsbasis, die eine Bewegtbildsequenz-Zeitachse als eine erste Dimensionsachse sowie eine Zeilenabfolge-Zeitachse als dazu orthogonale zweite Dimensionsachse aufweist, und in welche Einzelbilder mit vor- und nachgelagerten Bildern angeordnet und einer nachfolgenden, interpolierenden Transformation zugänglich gemacht werden.

Zum weiteren Stand der Technik, wiederum auch betreffend Technologien zur Bewegtbildkorrektur im Rolling-Shutter-Prozess, wird verwiesen auf die US 2011/267514 A1 sowie, zum weiteren Erfindungshintergrund, auf die US Die Aufgabe der vorliegenden Erfindung besteht in der Bereitstellung eines Verfahrens zur Transformation einer Bewegtbildsequenz in eine Bewegtbildsequenz mit verbesserter Bildqualität, wobei die Verbesserung insbesondere eine geringere Empfindlichkeit gegenüber Geschwindigkeitsänderungen besitzen soll. Das von der Erfindung bereitzustellende Verfahren soll somit sowohl zur Bildentzerrung als auch zur Bildstabilisierung einer zeilenweise mit einem CMOS-Sensor, erfassten Bewegtbildsequenz fähig sein. Ferner besteht die Aufgabe der vorliegenden Erfindung in der Bereitstellung einer Bewegtbildsequenz-Transformationsvorrichtung zur Verbesserung von zeilenweise erfassten Bewegtbildsequenzen.

Der Begriff eines zeilenweise erfassten Einzelbildes bezieht sich in der vorliegenden Anmeldung einheitlich darauf, dass, wie bereits zuvor erläutert, innerhalb eines Zeitintervalls zur Erfassung eines Einzelbildes jede Zeile des Einzelbildes im Vergleich zu ihrer vertikal benachbarten Zeile zu einem anderen Erfassungszeitpunkt innerhalb des Zeitintervalls erfasst bzw. aufgezeichnet wird. Jede Bildzeile umfasst dabei eine Vielzahl sich horizontal erstreckender Bildpunktpositionen, denen pro Zeile zu einem einzigen Zeitpunkt bzw. zeitlichen Augenblick jeweilige Bildpunktinhalte zugeordnet werden.

Die Aufgabe der vorliegenden Erfindung wird durch ein Verfahren mit den Merkmalen des unabhängigen Anspruchs 1 sowie durch ein Anwendungsverfahren nach dem Patentanspruch 10, eine Bewegtbildsequenz-Transformationsvorrichtung nach dem Patentanspruch 11, einen Chip nach dem Patentanspruch 12, eine Kameraeinheit nach dem Patentanspruch 13 sowie ein Computerprogrammprodukt nach dem Patentanspruch 14 gelöst. Zusätzliche Merkmale weiterer vorteilhafter Ausführungsformen ergeben sich aus den abhängigen Ansprüchen.

Das erfindungsgemäße Verfahren zur Transformation einer Bewegtbildsequenz mit dem Ziel, diese zu entzerren und zu stabilisieren, umfasst zunächst einen Schritt zum Bereitstellen, in einem Bewegtbildsequenz-Speicher, der Bewegtbildsequenz, die aus einer Vielzahl von aufeinander folgenden Einzelbildern zusammengesetzt ist, wobei jedes Einzelbild einem jeweiligen Zeitintervall aufeinander folgender Zeitintervalle zugeordnet ist. Jedes Zeitintervall wird durch seine jeweilige Startzeit und Endzeit festgelegt. Jedes Einzelbild ist zusammengesetzt aus einer Vielzahl von sich horizontal erstreckenden Zeilen bzw. Bildzeilen, die jeweils vertikal benachbart zueinander angeordnet sind. Jede Zeile umfasst mehrere Bildpunktpositionen von Bildpunkten mit einem jeweiligen Bildpunktinhalt. Die jeweiligen Zeilen eines Einzelbildes sind innerhalb des dem Einzelbild zugeordneten Zeitintervalls unterschiedlichen relativen Erfassungszeitpunkten zugeordnet, wobei jeder vertikalen Zeilenposition ein eindeutiger Zeitpunkt bzw. Erfassungszeitpunkt zugeordnet ist.

Im Folgenden wird ohne Beschränkung darauf davon ausgegangen, dass die in vertikaler Richtung oberste Zeile eines Einzelbildes zuerst ausgelesen wird und die in vertikaler Richtung unterste Zeile eines Einzelbildes bei der Erfassung des jeweiligen Einzelbildes zeitlich zuletzt ausgelesen wird bzw. ausgelesen worden ist.

Ferner umfasst das erfindungsgemäße Verfahren ein Bereitstellen, in einem Bildbewegungsinformation-Speicher, einer Bildbewegungsinformation, die einen Bewegungsfluss zwischen Einzelbildern der Bewegtbildsequenz beschreibt. Dabei kann die zwei aufeinander folgenden Einzelbildern zugeordnete Bildbewegungsinformation als eine Differenzinformation zwischen den jeweiligen zwei Einzelbildern aufgefasst werden, wobei sich die Differenzinformation auf den von einem Bildpunkt bzw. Pixel dargestellten Inhalt in dem vorherigen Bild relativ zu dem aktuellen Bild bezieht. Diese Differenzinformation kann dann bildpunktbezogen als ein Vektor, der ein Ausmaß und eine Richtung einer Verschiebung eines Bildabschnittinhaltes, der bevorzugt ein einzelner Bildpunkt ist, von dem vorherigen Bild zu dem aktuellen Bild wiedergibt, dargestellt werden.

Ein bekanntes Verfahren zur Ermittlung einer derartigen Bildbewegungsinformation ist die Bestimmung eines so genannten Optical-Flow-Vektorfeldes (oder auch eines Vektorfeldes, das einen optischen Fluss oder eine optische Bewegung beschreibt), in dem jeweiligen Bildabschnitten, bevorzugt individuellen Bildpunkten, jeweilige Vektoren mit Versatzausmaßen und Versatzrichtungen zugeordnet sind. Für einen jeweiligen Bildabschnitt eines Einzelbildes beschreibt dann ein jeweiliger Vektor die Bewegung dieses Bildabschnittes in aufeinander folgenden Einzelbildern. Eine derartige Bildbewegungsinformation kann beispielsweise mit Hilfe bekannter Bewegungsschätzungsalgorithmen ermittelt werden. Dem Fachmann sind derartige Methoden zum Berechnen des optischen Flusses mit Hilfe differentieller Methoden bekannt, wie beispielsweise das von Horn und Schunck entwickelte Verfahren (siehe "Determining optical flow", Artifical Intelligence, Vol. 17, Nr. 1-3, Seiten 185 bis 203, von 1981) oder das Lucas-Kanade-Verfahren (siehe B.D. Lucas und T. Kanadem, "An iterative image registration technique with an application to stereo vision", Proceedings of Imaging understanding workshop, Seiten 121 bis 130, von 1981). Bekannte Algorithmen zur Berechnung des optischen Flusses sind ferner in der C-Bibliothek OpenCV implementiert und somit für den Fachmann ohne praktische Probleme verfügbar bzw. einsetzbar.

Das erfindungsgemäße Verfahren umfasst ferner ein Transformieren der Bewegtbildsequenz durch wiederholtes Bilden, jeweils für ein aktuelles zu transformierendes Einzelbild, einer dem zu behandelnden, aktuellen Einzelbild zugeordneten Transformationsbasis. Die Transformationsbasis hat, als eine erste Dimensionsachse, eine Bewegtbildsequenz-Zeitachse, auch als t-Achse bezeichnet, entlang der die jeweiligen zeitlich aufeinander folgenden Zeitintervallen zugeordneten Einzelbilder der Bewegtbildsequenz angeordnet sind. Ferner hat die zweidimensionale Transformationsbasis, als eine zu der ersten Dimensionsachse orthogonale, zweite Dimensionsachse, eine Zeilenabfolge-Zeitachse, die den zeilenabhängigen relativen Zeitversatz innerhalb eines jeweiligen Einzelbildes repräsentiert. Die Transformationsbasis wird für das aktuelle Einzelbild gebildet, indem ein dem aktuellen Einzelbild zeitlich vorgelagertes, erstes Einzelbild, das einen zeitlichen Zustand vor dem, im Vergleich zum ersten Einzelbild später erfassten, aktuellen Einzelbild darstellt, das aktuelle Einzelbild und ein zweites Einzelbild entlang der ersten Dimensionsachse, also der Bewegtbildsequenz-Zeitachse, angeordnet sind, wobei das zweite Einzelbild dem aktuellen Einzelbild zeitlich nachgelagert ist, also zeitlich später erfasst wurde als das aktuelle Einzelbild. Das erste, das aktuelle und das zweite Einzelbild werden dabei so in der Transformationsbasis angeordnet, dass die horizontale Richtung jedes Einzelbildes, allgemein als x-Achse oder x-Richtung des Einzelbildes bezeichnet, senkrecht zu der ersten und zweiten Dimension der Transformationsbasis angeordnet ist. Dadurch sind denselben relativen Zeitpunkten, bezogen auf das jeweilige Erfassungszeitintervall eines Einzelbildes, zugeordnete Zeilen dieser Einzelbilder entlang einer für den relativen Zeitpunkt der Zeilenerfassung spezifischen Geraden zur t-Achse, also entlang der ersten Dimensionsachse, angeordnet.

Jedem Bildpunkt der zweidimensionalen Einzelbilder ist eine Bildpunktposition in einer Bildpunktebene mit einer ersten Bildpunktdimension und einer zweiten, zu der ersten Bildpunktdimension orthogonal ausgerichteten, Bildpunktdimension zugeordnet. Die erste Bildpunktdimension, in einer ersten Dimension eines jeweiligen Einzelbildes, entspricht der horizontalen Richtung des Einzelbildes, die allgemein als x-Richtung bezeichnet wird. Die zweite Bildpunktdimension, in einer zweiten Dimension eines jeweiligen Einzelbildes, entspricht der vertikalen Richtung des Einzelbildes, die allgemein als y-Richtung bezeichnet wird. Die zweite Bildpunktdimension ist folglich in Richtung der Zeilenabfolge-Zeitachse der Transformationsbasis, also in Richtung der zweiten Dimensionsachse der Transformationsbasis, ausgerichtet. Die erste Bildpunktdimension ist hingegen orthogonal zu der ersten und zu der zweiten Dimensionsachse der Transformationsbasis ausgerichtet. Gemäß dieser Sichtweise stellt die erste Bildpunktdimension, also die x-Richtung oder die horizontale Richtung jedes Einzelbildes, eine dritte Dimensionsachse, in einer dritten Dimension, der Transformationsbasis dar, die zu der ersten und zu der zweiten Dimensionsachse der Transformationsbasis orthogonal ausgerichtet ist, so dass die Transformationsbasis einen Transformationsraum aufspannt. Die Bildpunktebene steht gemäß dieser Sichtweise somit senkrecht zur ersten Dimension der Transformationsbasis, die auch als t-Achse bezeichnet wird.

Auf Grundlage dieser für ein jeweiliges, zu behandelndes aktuelles Einzelbild gebildeten Transformationsbasis erfolgt gemäß dem erfindungsgemäßen Verfahren ein Verschieben mindestens eines Bildpunktes des aktuellen Einzelbildes von einer aktuellen Bildpunktposition, dargestellt durch jeweilige Größen in der ersten und zweiten Dimension, zu einer neuen Bildpunktposition, ebenfalls dargestellt durch die jeweiligen Größen in der ersten und zweiten Dimension, durch Ausführen, für einen jeweils zu verschiebenden Bildpunkt, der im Folgenden dargestellten Schritte.

Zuerst wird für den zu verschiebenden Bildpunkt des aktuellen Einzelbildes eine diesem Bildpunkt zugeordnete bzw. entsprechende erste Bildpunktposition in dem ersten Einzelbild, also dem zeitlich vorgelagerten Einzelbild, auf Grundlage der Bildbewegungsinformation, die den Bewegungsfluss bzw. optischen Fluss von dem ersten Einzelbild zu dem aktuellen Einzelbild beschreibt, bestimmt. Ähnlich wird eine dem aktuellen Bildpunkt zugeordnete zweite Bildpunktposition in dem zweiten Einzelbild, also dem zeitlich nachgelagerten Einzelbild, auf Grundlage der Bildbewegungsinformation, die den Bewegungsfluss bzw. den optischen Fluss von dem aktuellen Einzelbild zu dem zweiten Einzelbild beschreibt, bestimmt. Anschließend wird ein der Anfangszeit, repräsentiert durch eine sich entlang der zweiten Dimension der Transformationsbasis erstreckende Gerade, des aktuellen Einzelbildes zugeordneter erster Interpolationspunkt in der Transformationsbasis auf Grundlage der zuvor bestimmten ersten Bildpunktposition und der aktuellen Bildpunktposition ermittelt. Ähnlich wird ein der Endzeit, in der Transformationsbasis repräsentiert durch eine sich entlang der zweiten Dimension erstreckende Gerade, des aktuellen Einzelbildes zugeordneter zweiter Interpolationspunkt in der Transformationsbasis auf Grundlage der aktuellen Bildpunktposition und der zuvor bestimmten zweiten Bildpunktposition ermittelt. Die gesuchte, neue Bildpunktposition des aktuellen Bildpunktes wird dann auf Grundlage eines Mittelwertes, der ein arithmetischer, geometrischer oder andersweitig bestimmter Mittelwert sein kann, des ersten und zweiten Interpolationspunktes in der Transformationsbasis bestimmt. Abschließend wird eine Zuordnung des aktuellen Bildpunktes und der bestimmten neuen Bildpunktposition in einem Speicher erfasst, um das Ergebnis des Verschiebens des Bildpunktes von der aktuellen Bildpunktposition zu der neuen Bildpunktposition in einer Vorrichtung festzuhalten. Die Interpolationspunkte werden in der vorliegenden Anmeldung auch Schnittpunkte genannt.

Insbesondere die oben beschriebene Ausbildung der Transformationsbasis durch gezielte Anordnung der Einzelbilder in der Transformationsbasis, die Bestimmung der Interpolationspunkte bzw. Schnittpunkte in der Transformationsbasis, und die Bestimmung der neuen Bildpunktposition, in der zweidimensionalen Bildpunktebene, auf Grundlage des Mittelwertes der Interpolationswerte bzw. Schnittpunkte ermöglichen eine exzellente Entzerrung und Stabilisierung, also eine Beseitigung eines Wackeleffektes der Sequenz, einer Bewegtbildsequenz. Das erfindungsgemäße Verfahren zeichnet sich daher durch ein besonders gutes Entzerrungs- und Stabilisierungsverhalten aus. Ferner wird durch die Kombination der Bewegungsinformation bezüglich des ersten und des aktuellen Einzelbildes einerseits und der Bewegungsinformation bezüglich des aktuellen und des zweiten Einzelbildes andererseits, also einer Berücksichtigung von Bewegungsinformationen in eine Vergangenheit und eine Zukunft des aktuellen Einzelbildes, eine hohe Robustheit und eine sehr gute Fehlertoleranz erreicht. Besonders sticht die Fähigkeit des Verfahrens hervor, eine Stabilisierung der aufgezeichneten Bewegtbildsequenz gegenüber vertikalen Erschütterungen bzw. Verwackelungen zu erzielen. Besonders gut kann das erfindungsgemäße Verfahren stoßartige Bildversätze ausgleichen. Ferner wird das erfindungsgemäße Verfahren nicht durch eine optische Weitwinkelverzerrung, ein so genannter Fischaugeneffekt, des die Bewegtbildsequenz erfassenden Bildsensors störend beeinflusst. Vielmehr bleibt trotz der Entzerrung der Bewegtbildsequenz ein möglicherweise im Bildsensor bereitgestellter Fischaugeneffekt erhalten. Ferner ist das Verfahren robust gegenüber einem Sensor-Rauschen und auch fehlerbehafteten Abschnitten in der Bewegungsflussinformation bzw. dem Vektorfeld des optischen Flusses bzw. der optischen Bewegung. Das Verfahren lässt sich zudem einfach implementieren und effizient auf mehrere Cores anpassen. Weiterhin ist das Verfahren auch für eine Berechnung auf einem dedizierten Grafikprozessor, einer GPU, gut geeignet. Da das erfindungsgemäße Verfahren neben dem aktuellen Einzelbild nur das erste und zweite Einzelbild als Vorgänger- bzw. Nachfolger-Einzelbild benötigt, eignet sich das Verfahren auch besonders gut für eine Echtzeitanwendung.

Gemäß einem weiteren Aspekt des erfindungsgemäßen Verfahrens wird der erste Interpolationspunkt auf Grundlage einer ersten Linie ermittelt, die in der Transformationsbasis durch die erste Bildpunktposition und die aktuelle Bildpunktposition läuft. Alternativ oder zusätzlich wird der zweite Interpolationspunkt auf Grundlage einer zweiten Linie ermittelt, die in der Transformationsbasis durch die aktuelle Bildpunktposition und die zweite Bildpunktposition läuft. Durch diese konkrete Ausgestaltung der Bestimmung der Interpolationspunkte kann das erfindungsgemäße Verfahren besonders effizient realisiert werden.

Gemäß einer Weiterbildung der zuvor erwähnten Ausführungsform des erfindungsgemäßen Verfahrens ist die erste und/oder die zweite Linie durch eine jeweilige lineare, quadratische oder kubische Funktion in der Transformationsbasis bestimmt. Besonders effizient kann das Verfahren realisiert werden, wenn die Linie durch eine lineare Funktion, also durch eine Gerade, realisiert wird. Die Berücksichtigung einer quadratischen oder kubischen Funktion ermöglicht es, besonders effizient eine Bewegungs- und/oder Beschleunigungsschätzung einer Bildpunktposition von einem ersten Einzelbild zu einem zweiten Einzelbild für die Bildentzerrung zu berücksichtigen.

Weiterhin entsprechend dem erfindungsgemäßen Verfahren wird der erste Interpolationspunkt ermittelt als ein Schnittpunkt der ersten Linie mit einer der Anfangszeit des aktuellen Einzelbildes zugeordneten Anfangszeitachse, die sich in der Transformationsbasis entlang der zweiten Dimension erstreckt und die, bezogen auf die Bewegtbildsequenz-Zeitachse, die Bildanfangsgrenze des aktuellen Einzelbildes bzw. die ganz links gelegene Seite des aktuellen Einzelbildes darstellt. Alternativ oder zusätzlich wird der zweite Interpolationspunkt ermittelt als ein Schnittpunkt der zweiten Linie mit einer der Endzeit des aktuellen Einzelbildes zugeordneten Endzeitachse, die sich in der Transformationsbasis entlang der zweiten Dimension erstreckt, und die, bezogen auf die Bewegtbildsequenz-Zeitachse, die Bildendgrenze des aktuellen Einzelbildes bzw. dessen äußerst rechts gelegene Seite darstellt.

Entsprechend dem erfindungsgemäßen Verfahren wird die neue Bildpunktposition des aktuellen Bildpunktes für die zweite Dimension der Bildpunktebene, also die y-Richtung, als ein (arithmetischer, geometrischer oder anderweitig bestimmter) Mittelwert der Positionen des ersten Schnittpunktes und des zweiten Schnittpunktes in der zweiten Dimension der Transformationsebene, also der jeweiligen Positionen der Schnittpunkte in Richtung der Zeitabfolge-Zeitachse bzw. der y-Achse, bestimmt.

Dadurch kann eine besonders wirksame Bildstabilisierung und Bildentzerrung erreicht werden.

Weiterhin erfindungsgemäß wird die neue Bildpunktposition auch für die erste Dimension der Bildpunktebene, also die x-Richtung, als ein (arithmetischer, geometrischer oder anderweitig bestimmter) Mittelwert der Positionen des ersten und zweiten Schnittpunktes in der dritten Dimension der Transformationsbasis bestimmt.

Dadurch kann auch eine besonders wirksame Bildstabilisierung und Bildentzerrung erreicht werden.

Gemäß einer weiteren vorteilhaften Ausführungsform des erfindungsgemäßen Verfahrens erfolgt das Bestimmen der neuen Bildpunktposition des aktuellen Bildpunktes durch ein Ermitteln, bevorzugt durch ein Berechnen, eines ersten Korrekturversatzes in der ersten Dimension der Bildpunktebene, also entlang der horizontalen Achse des aktuellen Einzelbildes. Alternativ oder zusätzlich wird insbesondere ein zweiter Korrekturversatz in der zweiten Dimension der Bildpunktebene, also bezüglich des Koordinatenwertes in der y-Achse bzw. der vertikalen Achse des aktuellen Einzelbildes, ermittelt auf Grundlage der ersten und zweiten Bildpunktposition nur in der zweiten Dimension der Bildpunktebene, also deren jeweiligen y-Achsenwerte, und der aktuellen Bildpunktposition, also des y-Wertes der aktuellen Bildpunktposition.

Zusätzlich kann als Ergänzung bzw. konkreteren Ausgestaltung der zuvor aufgeführten erfindungsgemäßen Ausführungsform das Ermitteln des ersten und/oder des zweiten Korrekturversatzes ferner auf Grundlage einer vorbestimmten Geschwindigkeit, die bevorzugt eine Zeilenabfolgegeschwindigkeit und besonders bevorzugt eine Einzelbilderfassungsgeschwindigkeit oder eine Zeilenerfassungsgeschwindigkeit eines CMOS-Sensors ist, der die zu transformierende Bewegtbildsequenz zuvor erfasst hat, und/oder auf Grundlage einer vorbestimmten Zeilendimensionsgröße erfolgen, die bevorzugt zugehörig ist zu dem CMOS-Sensor, der die zum Transformieren der Bewegtbildsequenz zuvor erfasst hat.

Diese und die zuvor erwähnte Ausführungsformen ermöglichen eine besonders berechnungsaufwandeffiziente Bestimmung der neuen Bildpunktposition des aktuellen Bildpunktes.

Erfindungsgemäß umfasst die Transformationsbasis eine dritte Dimension, die zu der ersten und zweiten Dimension der Transformationsbasis orthogonal ist, wobei die Bildpunktebenen der Einzelbilder in der zu der ersten Dimension der Transformationsbasis orthogonalen Ebene, und somit entlang der zweiten und dritten Dimension der Transformationsbasis, parallel zueinander angeordnet sind. Die vertikale Achse jedes Einzelbildes liegt demgemäß in der zweiten Dimension der Transformationsbasis, so dass die vertikale Achse jedes Einzelbildes, also die zweite Bildpunktdimension, und die zweite Dimensionsachse der Transformatiosbasis zumindest parallel zueinander ausgerichtet sind und bevorzugt zueinander identisch sind. Letzteres wird ohne Beschränkung darauf für die Beschreibung der Ausführungsformen angenommen. Somit stimmt die vertikale Achse jedes Einzelbildes, also die zweite Bildpunktdimension der Bildpunktebene, mit der zweiten Dimension der Transformationsbasis überein. Die entsprechenden Achsen in der zweiten Bildpunktdimension und der zweiten Dimension der Transformationsbasis werden deshalb auch einheitlich als y-Achse bezeichnet.

Gemäß einer weiteren vorteilhaften Ausführungsform des erfindungsgemäßen Verfahrens ist das erste Einzelbild zu dem in der Bewegtbildsequenz folgenden aktuellen Einzelbild höchstens um einen ersten Einzelbildabstand von drei, bevorzugt von zwei und besonders bevorzugt von genau einem Einzelbild beabstandet. Ferner ist das zweite Einzelbild zu dem in der Bewegtbildsequenz vorgehenden, aktuellen Einzelbild um einen zweiten Einzelbildabstand von drei, bevorzugt von zwei und besonders bevorzugt von genau einem Einzelbild beabstandet. Sowohl für den ersten als auch für den zweiten Einzelbildabstand meint hierbei ein Einzelbildabstand von eins, dass das erste bzw. zweite Einzelbild zu dem aktuellen Einzelbild direkt benachbart ist. Die Entzerrung der Bewegtbildsequenz und deren Stabilisierung können besonders wirksam erreicht werden, wenn das erste Einzelbild, das aktuelle Einzelbild und das zweite Einzelbild jeweils direkt zueinander benachbart sind, also der erste und der zweite Einzelbildabstand jeweils eins sind.

Ferner sieht die Erfindung ein Anwendungsverfahren zur Bildentzerrung und Bildstabilisierung einer mit einem CMOS-Sensor aufgezeichneten Bewegtbildsequenz mit Anwendung einer der zuvor beschriebenen erfindungsgemäßen Ausführungsformen des Verfahrens auf die aufgezeichnete Bewegtbildsequenz vor.

Außerdem umfasst die folgende Erfindung eine Bewegtbildsequenz-Transformationsvorrichtung, die ausgebildet ist zum Ausführen einer der Ausführungsformen des erfindungsgemäßen Verfahrens.

Weiterhin umfasst die Erfindung einen Chip, der mit einer Hardware-Architektur zum Ausführen einer der Ausführungsformen des erfindungsgemäßen Verfahrens ausrüstet ist.

Außerdem umfasst eine weitere erfindungsgemäße Ausführungsform eine Kameraeinheit mit einem CMOS-Sensor. Dabei ist die Kameraeinheit ausgebildet zur Bildentzerrung und Bildstabilisierung, nach Abschluss einer Aufzeichnung einer Bewegtbildsequenz oder in Echtzeit während der Aufzeichnung, der mit dem CMOS-Sensor aufgezeichneten Bewegtbildsequenz mittels Anwenden einer der zuvor aufgeführten Ausführungsformen des erfindungsgemäßen Verfahrens.

Gemäß einer weiteren erfindungsgemäßen Ausführungsform ist ein Computerprogrammprodukt vorgesehen mit einem Programmcode zur Ausführung einer der Ausführungsformen des erfindungsgemäßen Verfahrens auf einem Computer, der den Programmcode ausführt bzw. zur Ausführung des Programmcodes vorgesehen ist.

Eine weitere Ausführungsform der Erfindung umfasst einen Datenträger mit einem darauf aufgezeichneten Programmcode zur Ausführung einer der Ausführungsformen des erfindungsgemäßen Verfahrens auf einem Computer.

Weitere vorteilhafte erfindungsgemäße Ausführungsformen ergeben sich aus der Kombination von mindestens zwei der zuvor oder im Nachfolgenden aufgeführten erfindungsgemäßen Ausführungsformen, sofern eine derartige Kombination nicht offensichtlich widersinnig ist.

Als verfahrensgemäß offenbarte Merkmale sollen auch als vorrichtungsgemäß offenbart gelten und beansprucht werden können.

Im Folgenden werden beispielhafte Ausführungsformen der Erfindung anhand der beigefügten Figuren erläutert, in denen

Fig. 1    eine Darstellung einer erfindungsgemäß gebildeten Transformationsbasis mit einem ersten Einzelbild, einem aktuellen Einzelbild und einem zweiten Einzelbild zeigt;

Fig. 2    einen zum Bestimmen der neuen Bildpunktposition verwendeten Ausschnitt der Transformationsbasis gemäß Fig. 1 zeigt;

Fig. 3    ein Flussdiagramm zeigt, das schematisch die Transformation einer Bewegtbildsequenz mit dem erfindungsgemäßen Verfahren veranschaulicht;

Fig. 4    ein Flussdiagramm ist, das eine Ausführungsform des in Fig. 3 erwähnten Schrittes zum Verschieben eines Bildpunktes detailliert veranschaulicht;

Fig. 5    ein Flussdiagramm ist, das eine andere Ausführungsform des in Fig. 3 gezeigten Schrittes zum Verschieben eines Bildpunktes detailliert veranschaulicht.

In den Figuren bezeichnen dieselben Bezugzeichen dieselben oder ähnliche Komponenten. Eine mehrfache, figurenbezogene Erläuterung von mit denselben Bezugzeichen versehenden Komponenten wird aus Gründen der Klarheit der Darstellung der Erfindung weggelassen.

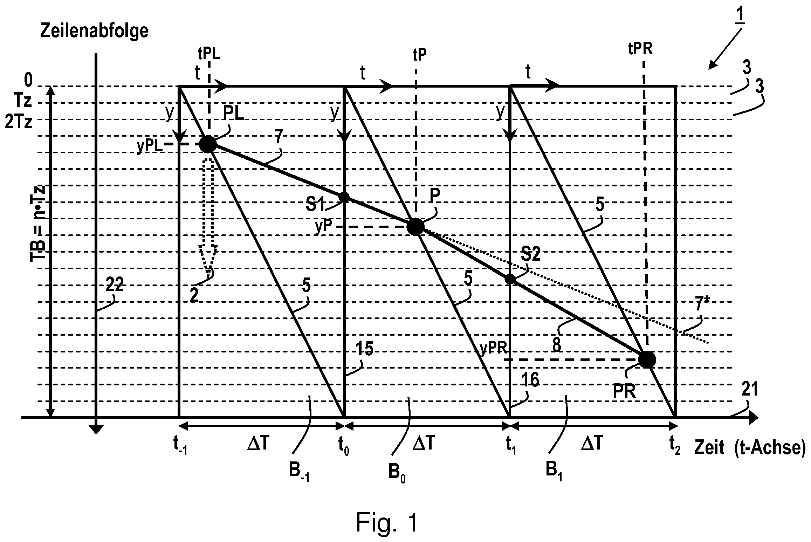

Fig. 1 zeigt eine beispielhafte Ansicht einer der gemäß dem erfindungsgemäßen Verfahren bestimmten Transformationsbasis, die als Grundlage zum Bestimmen der neuen Bildpunktposition des zu verschiebenden Bildpunktes des aktuellen Einzelbildes dient. Die in Fig. 1 gezeigte Transformationsbasis 1 erstreckt sich entlang einer ersten Dimension und einer zweiten Dimension der Transformationsbasis, nämlich horizontal entlang einer Bewegtbildsequenz-Zeitachse 21 und vertikal entlang einer Zeitabfolge-Zeitachse 22. Eine dritte Dimension der Transformationsbasis, die sich orthogonal zu der ersten und zweiten Dimension erstreckt, ist aufgrund der besseren Verständlichkeit der folgenden Erläuterungen nicht dargestellt. Entlang der Bewegtbildsequenz-Zeitachse 21 als der ersten Dimensionsachse der Transformationsbasis 1 sind Anfangszeiten $t_{-1}$, $t_0$, $t_1$ eines ersten Einzelbildes $B_{-1}$, $B_0$ bzw. $B_1$ und deren zugehörige Endzeiten $t_0$, $t_1$, $t_2$ abgetragen, wobei sich die jeweiligen Einzelbilder jeweils entlang der ersten Dimensionsachse 21 über ein Zeitintervall $\Delta T$ erstrecken. In der zu der ersten Dimensionsachse orthogonalen, zweiten Dimensionsachse, die eine Zeilenabfolge eines Einzelbildes repräsentiert, sind die einzelnen Zeilen 3 durch horizontale, zueinander parallel verlaufende gestrichelte Linien angedeutet.

Auf der linken Seite von Fig. 1 sind die relativen Zeitpunkte als ganzzahlige Vielfache von Tz abgetragen, zu denen eine jeweilige Zeile 3 innerhalb einer Bilderfassungszeit TB eines Einzelbildes erfasst wird.

Gemäß Fig. 1 wird die erste, oberste Bildzeile zu einem relativen Zeitpunkt 0 erfasst, während die darauf folgende Bildzeile zu einem relativen Zeitpunkt Tz erfasst wird und die wiederum darauf folgende Bildzeile zu einem Zeitpunkt 2Tz erfasst wird, und die unterste, letzte Zeile mit der größten Verzögerung nämlich $(n-1)\cdot Tz$ erfasst wird.

In der in Fig. 1 gezeigten Transformationsbasis 1 sind ein erstes Einzelbild $B_{-1}$, ein aktuelles Einzelbild $B_0$, und ein zweites Einzelbild $B_1$, die zeitlich direkt aufeinander folgen und somit Einzelbildabstände von jeweils eins zueinander aufweisen, so in der Transformationsbasis 1 angeordnet, dass die horizontale Richtung jedes Einzelbildes, also in der ersten Bildpunktdimension jedes Einzelbildes, parallel zu einer zu demselben relativen Zeitpunkt erfassten Zeile verläuft. Dabei sind die drei Einzelbilder ($B_{-1}$, $B_0$, $B_1$) ferner so in der Transformationsbasis 1 angeordnet, dass die vertikale Richtung dieser Einzelbilder, also deren y-Achse in der zweiten Bildpunktdimension, in Übereinstimmung mit der Zeilenabfolge-Achse 22, also der zweiten Dimension der Transformationsbasis ausgerichtet ist. Die zeilenabhängige Verzögerungszeit innerhalb eines jeweiligen Einzelbildes ist in Fig. 1 einerseits durch die auf der linken Seite von Fig. 1 dargestellten relativen Zeitpunkte und andererseits durch eine jedes Einzelbild von oben links nach unten rechts schräg durchlaufende Erfassungsverzögerungszeitdiagonale 5 dargestellt. Ein zu verschiebender Bildpunkt P des aktuellen Einzelbildes $B_0$ mit den Positionen bzw. Zeit und Bildpunktposition tP in Richtung der t-Achse des Einzelbildes und yP in Richtung der y-Achse des Einzelbildes liegt demgemäß auf der diesem Einzelbild $B_0$ zugehörigen Erfassungsverzögerungszeitdiagonale 5. Der zeitliche Bildanfang des aktuellen Einzelbildes $B_0$ liegt in der Transformationsbasis 1 auf der Bewegtbildsequenz-Zeitachse bei der Position $t_0$, und der zeitliche Bildanfang bzw. die Bildanfanggrenze des aktuellen Einzelbildes ist durch die der vertikal und gerade verlaufende Anfangszeitachse 15 gekennzeichnet. Entsprechend ist das zeitliche Ende des aktuellen Einzelbildes in der Transformationsbasis durch die vertikal verlaufende Endzeitachse 16 bei der Endzeit $t_1$ gekennzeichnet. Die auf Grundlage der jeweiligen Bildbewegungsinformation bestimmten Bildpunktpositionen in dem ersten Einzelbild $B_{-1}$ und dem zweiten Einzelbild $B_1$, die der aktuellen Positionen tP, yP zugeordnet sind, liegen in dem jeweiligen Einzelbild ebenfalls auf der jeweiligen Erfassungsverzögerungszeitdiagonalen 5 mit den Positionen bzw. Zeit und Bildpunktposition tPL und yPL für das erste Einzelbild und tPR und yPR für das zweite Einzelbild.

Der in Fig. 1 gestrichelt gezeichnete und vertikal nach unten ausgerichtete Pfeil 2 soll die der Darstellung in Fig. 1 beispielhaft zugrunde liegende Bewegung der Bildpunkte PL, P, PR, die einander über die jeweilige Bildbewegungsinformation zugeordnet sind, darstellen. Konkret soll in Fig. 1 eine vertikal nach unten gerichtete und beschleunigte Bewegung des Bildpunktinhalts vom Einzelbild $B_{-1}$ zum aktuellen Einzelbild $B_0$ zum nächsten Einzelbild $B_1$ dargestellt werden. Der Beschleunigung entsprechend, nimmt die Auslenkung des jeweiligen Punktes PL, P bzw. PR auf der jeweiligen Erfassungsverzögerungszeitdialogen 5 diagonal nach rechts unten zu, was darstellt, dass der jeweilige Bildpunkt innerhalb des Einzelbild-Zeitintervalls $\Delta T$ zu einem zunehmend späteren relativen Zeitpunkt innerhalb des jeweiligen Einzelbildes erfasst wird.

Eine erste Linie 7 ist als eine Verbindungslinie von der ersten Zeit und Bildpunktposition tPL, yPL des ersten Einzelbildes $B_{-1}$ zu der aktuellen Bildpunktposition tP, yP des aktuellen Einzelbildes $B_0$ festgelegt, und diese Linie 7 schneidet die Anfangszeitachse 15 des aktuellen Einzelbildes $B_0$ im Schnittpunkt S1. Ähnlich ist in der Transformationsbasis 1 eine Linie 8 ermittelt bzw. bestimmt worden, die durch die Zeit und Bildpunktposition tP, yP des aktuellen Einzelbildes $B_0$ und durch die zweite Zeit und Bildpunktposition tPR, yPR des zweiten Einzelbildes $B_1$ läuft. Diese Linie 8 schneidet die Endzeitachse 16 im Schnittpunkt S2. Da in Fig. 1 der beispielhafte Fall einer vertikalen Beschleunigung eines Bildpunktes bzw. dessen zugehörigen Inhaltes dargestellt ist, weist die Linie 8 eine stärkere Steigung im Vergleich zu der Linie 7 auf, was deutlich bei einem Vergleich mit der als Fortsetzung der Linie 7 in Fig. 1 gestrichelt gezeichneten Linie 7* hervorgeht.

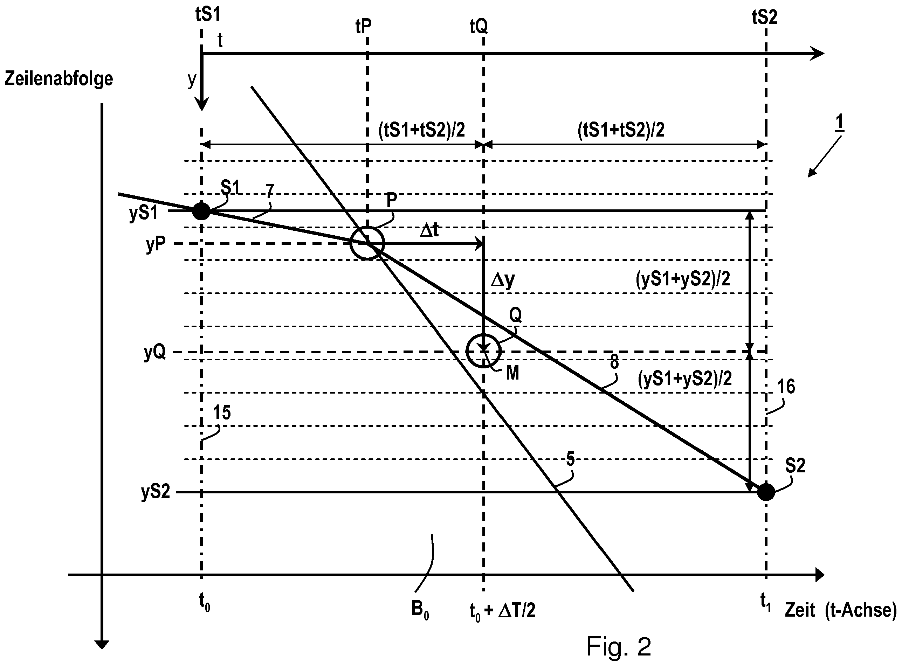

In Fig. 2 ist ein auf den Abschnitt des aktuellen Einzelbildes $B_0$ fokussierter Ausschnitt der erfindungsgemäß gebildeten Transformationsbasis 1 gezeigt. Die grundsätzlichen Erläuterungen bezüglich Fig. 1 treffen auch auf Fig. 2 zu. In Fig. 2 ist hingegen konkreter dargestellt, wie basierend auf der aktuellen Zeit und Bildpunktposition tP, yP die neue Zeit und Bildpunktposition tQ, yQ bestimmt wird. Wie in Fig. 2 dargestellt, ist der erste Schnittpunkt S1 als Schnittpunkt der ersten Linie 7, die die erste Zeit und Bildpunktposition tPL, yPL mit der aktuellen Zeit und Bildpunktposition tP, yP verbindet, mit der Anfangszeitachse 15 des aktuellen Einzelbildes durch die Zeit und Bildpunktpositionen tS1, yS1 bestimmt. Der Schnittpunkt S2 ist durch die Zeit und Bildpunktpositionen tS2, yS2 bestimmt. Wie in Fig. 2 beispielhaft gezeigt, wird die neue Zeit und Bildpunktposition im aktuellen Einzelbild $B_0$ bestimmt auf Grundlage eines Mittelwertes des ersten und des zweiten Interpolationspunktes bzw. Schnittpunktes S1 und S2. Die neue Bildpunktposition yQ des aktuellen Bildpunktes wird für die zweite Dimension, also die y-Achse des aktuellen Einzelbildes, als ein Mittelwert von yS1 und yS2 bestimmt. Es gilt also:

$$yQ = (yS1 + yS2) / 2$$

oder anders ausgedrückt: yQ = yS1 + |yS1 - yS2|/2,
oder noch anders ausgedrückt: yQ = yS2 - |yS1 - yS2|/2.

Für die zweite Bildpunktposition x, die orthogonal im Bild zur y-Achse verläuft und die horizontale Pixel-Position bestimmt gilt:

$$xQ = (xS1 + xS2) / 2$$

oder anders ausgedrückt: xQ = xS1 + |xS1 - xS2|/2,
oder noch anders ausgedrückt: xQ = xS2 - |xS1 - xS2|/2.

In Fig. 2 ist auch die Ausführungsform des erfindungsgemäßen Verfahrens dargestellt, bei der die Mittelung der Schnittpunktpositionen bzw. Interpolationspunktpositionen in Richtung der t-Achse des Einzelbildes $B_0$ erfolgt. Die neue Zeit tQ ist demgemäß definiert als:

$$tQ = (tS1 + tS2) / 2.$$

Da die Positionen der Schnittpunkte S1 und S2 in der Richtung der t-Achse immer durch die Anfangszeitachse 15 bzw. die Endzeitachse 16 des aktuellen Einzelbildes $B_0$ fest vorgegeben sind, liegt die neue Zeitposition in der ersten Achse, also tQ, gemäß dieser Ausführungsform stets auf demselben Punkt, was hingegen nicht für die neue Zeitposition tQ in der zweiten Dimensionsachse zutrifft.

In Fig. 2 sind - zur Veranschaulichung einer weiteren Ausführungsform des erfindungsgemäßen Verfahrens - ein Korrekturversatz $\Delta y$ in Richtung der y-Achse bzw. der zweiten Dimension der Transformationsbasis 1 dargestellt, und Fig. 2 verdeutlicht die Bestimmung der neuen Zeit und Bildpunktposition tQ, xQ, yQ:

$$xQ := xP + \Delta x$$

$$yQ := yP + \Delta y$$

$$tQ := tP + \Delta t$$

Die Bestimmung von tQ bzw. $\Delta t$ in der ersten Dimension der Transformationsbasis, wie in Fig. 2 veranschaulicht, stellt dabei ein mathematisches Hilfsmittel dar, um letztlich aus der dreidimensionalen Transformationsbasis die maßgeblichen Korrekturgrößen in der zweidimensionalen Bildpunktebene berechnen zu können.

Dabei werden der erste Korrekturversatz $\Delta x$ und der zweite Korrekturversatz $\Delta y$ letztlich, nach einer mathematischen Umformung von $\Delta x$, $\Delta y$ und $\Delta t$, wie folgt bestimmt:

$$\Delta x = \frac{-(xPL{\cdot}yPR{\cdot}v^2{\cdot}yP + xPR{\cdot}yPL{\cdot}v^2{\cdot}yP - h{\cdot}xPR{\cdot}v{\cdot}yP + h{\cdot}xPL{\cdot}v{\cdot}yP - h{\cdot}xPR{\cdot}yPL{\cdot}v + h^2{\cdot}xPR)}{2(yPL{\cdot}v - h)(yPR{\cdot}v + h)}$$

$$\Delta y = \frac{-(2{\cdot}yPL{\cdot}yPR{\cdot}v^2{\cdot}yP - h{\cdot}yPR{\cdot}v{\cdot}yP + h{\cdot}yPL{\cdot}v{\cdot}yP - h{\cdot}yPL{\cdot}yPR{\cdot}v + h^2{\cdot}yPR)}{2(yPL{\cdot}v - h)(yPR{\cdot}v + h)}$$

Die Größe v in den obigen zwei Formeln steht für eine vorbestimmte Geschwindigkeit, die bevorzugt eine Zeilenabfolgegeschwindigkeit und besonders bevorzugt eine Einzeibilderfassungsgeschwindigkeit oder eine Zeilenerfassungsgeschwindigkeit eines CMOS-Sensors ist, der die zu transformierende Bewegtbildsequenz zuvor erfasst hat. Die Größe h in den obigen zwei Formeln steht für eine vorbestimmten Zeilendimensionsgröße, die bevorzugt zugehörig ist zu dem CMOS-Sensor, der die zu transformierende Bewegtbildsequenz zuvor erfasst hat, und ist besonders bevorzugt die Höhe des CMOS-Sensors, also dessen Erstreckung in der zweiten Dimension.

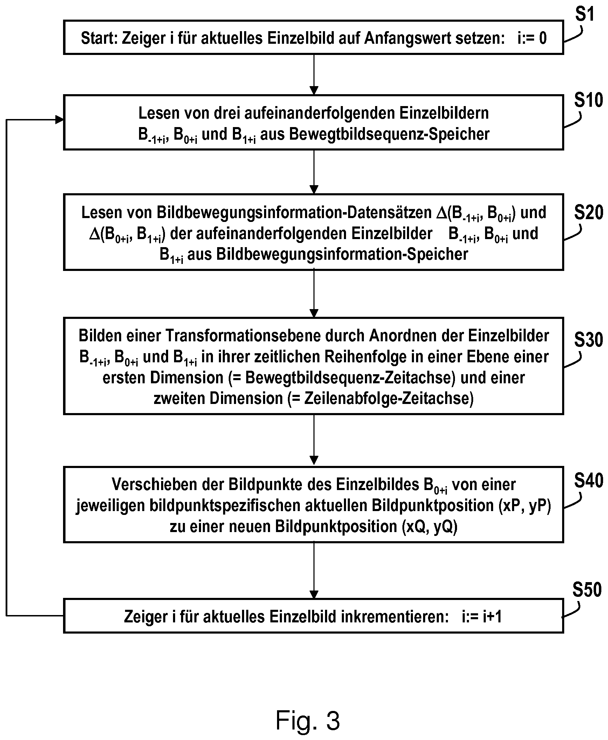

Fig. 3 zeigt ein Flussdiagramm, das einen beispielhaften Ablauf einer erfindungsgemäßen Ausführungsform des Verfahrens zum Transformieren einer Bewegtbildsequenz veranschaulicht. In einem ersten Schritt wird ein Zeiger i, der jeweils im Sinne eines Index auf das derzeit aktuelle Einzelbild zeigt, auf einen Anfangswert gesetzt (i:= 0). Anschließend werden iterativ Schritte S10 bis S50 zum Transformieren der Bewegtbildsequenz durchgeführt. Im Schritt S10 werden zunächst drei aufeinander folgende Einzelbilder $B_{-1+i}$, $B_{0+i}$ und $B_{1+i}$ aus einem Bewegtbildsequenz-Speicher ausgelesen. Außerdem werden im Schritt S20 ein erster Bildbewegungsinformations-Datensatz $\Delta(B_{-1+i}, B_{0+i})$, der den optischen Fluss bzw. die optische Bewegung von dem ersten Einzelbild $B_{-1+i}$ zu dem aktuellen Einzelbild $B_{0+i}$ beschreibt, und ein zweiter Bildbewegungsinformations-Datensatz $\Delta(B_{0+i}, B_{1+i})$, der den optischen Fluss bzw. Bewegungsfluss vom aktuellen Einzelbild $B_{0+i}$ zum zweiten Einzelbild $B_{1+i}$ beschreibt, aus dem Bildbewegungsinformation-Speicher gelesen. Anschließend wird im Schritt S30 die Transformationsbasis 1 gebildet mittels Anordnen der im Schritt S10 gelesenen Einzelbilder $B_{-1+i}$, $B_{0+i}$ und $B_{1+i}$ in ihrer zeitlichen Reihenfolge entlang der Bewegtbildsequenz-Zeitachse. Anschließend erfolgt im Schritt S40 ein Verschieben mindestens eines Bildpunktes des Einzelbildes $B_{0+i}$ von einer jeweiligen bild-punktspezifischen aktuellen Bildpunktposition xP, yP zu einer neuen, zu bestimmenden Bildpunktposition xQ, yQ. Nachdem die zur Transformation ausgewählten Bildpurikte des Einzelbildes $B_0+_i$ zu den jeweiligen neuen Bildpunktpositionen verschoben worden sind, wird im Schritt S50 der Zeiger i (bzw. dessen Zählwert) für das aktuelle Einzelbild um eins erhöht, und es schließt sich die Wiederholung der Schritte S10 bis S50 für das durch den, um eins erhöhten, Zeiger i festgelegte, nächste Einzelbild an.

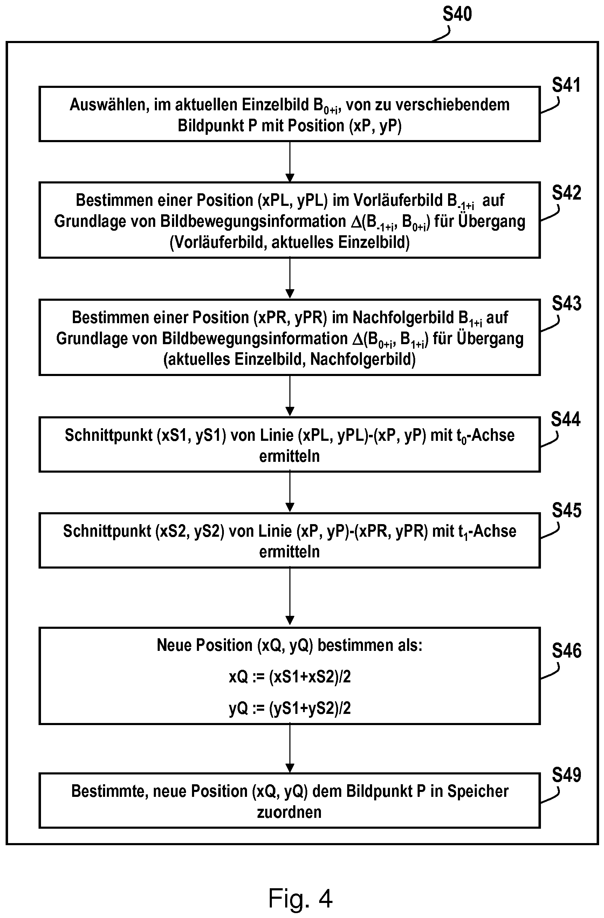

Das Flussdiagramm in Fig. 4 zeigt eine erfindungsgemäße Ausführungsform des in der Fig. 3 gezeigten Schrittes S40. Die in Fig. 4 gezeigte Realisierung des Schrittes S40 entspricht im Wesentlichen der Bestimmung der neuen Position xQ, yQ über die jeweiligen Mittelwerte der Schnittpunktpositionen.

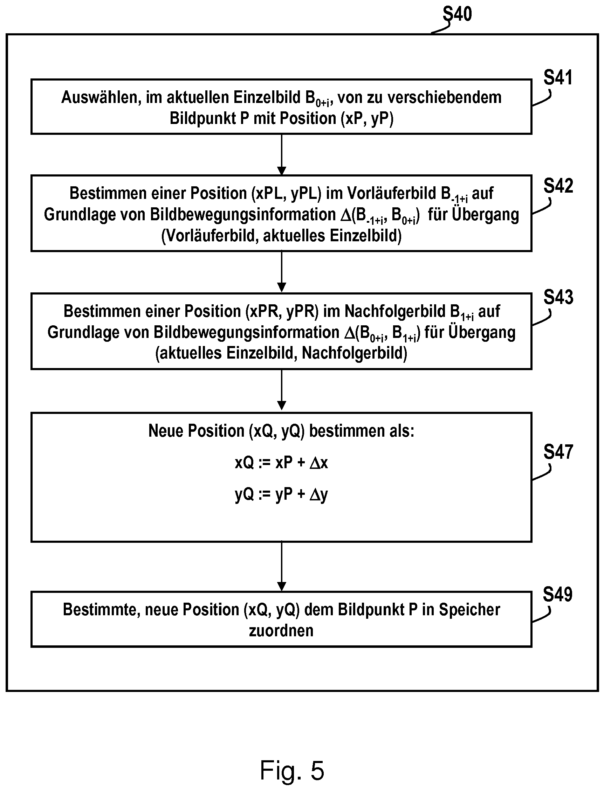

In Fig. 5 ist eine andere erfindungsgemäße Ausführungsform des in Fig. 3 aufgeführten Schrittes S40 veranschaulicht. Die in Fig. 5 in Schritt S47 aufgeführte Bestimmung der neuen Position xQ, yQ basiert dabei auf der Bestim-mung des ersten Korrekturversatzes $\Delta x$ und des zweiten Korrekturversatzes $\Delta y$ mit Anwendung der oben aufgeführten Formeln zur Bestimmung des ersten bzw. zweiten Korrekturversatzes $\Delta x$ und $\Delta y$.

Die vorliegende Erfindung ist nicht auf die hier beispielhaft gezeigten und erläuterten Ausführungsformen beschränkt. Der Schutzbereich der Erfindung wird vielmehr durch die beigefügten Ansprüche definiert.

**Patentansprüche**

1. Verfahren zur Transformation einer mit einem CMOS-Sensor erfassten Bewegtbildsequenz aus zeilenweise zeitversetzt erfassten Einzelbildern, insbesondere zur Bildentzerrung und zur Bildstabilisierung, mit den Schritten zum:

   Bereitstellen, in einem Bewegtbildsequenz-Speicher, einer Bewegtbildsequenz mit einer Vielzahl von zeitlich aufeinander folgenden Zeitintervallen ($\Delta T$), die durch eine jeweilige Startzeit ($t_{-1}$, $t_0$, $t_1$) und Endzeit ($t_0$, $t_1$, $t_2$) festgelegt sind, zugeordneten Einzelbildern ($B_{-1}$, $B_0$, $B_1$), wobei jedes Einzelbild sich entlang einer Bewegtbildsequenz-Zeitachse (21) über ein Zeitintervall erstreckt und zusammengesetzt ist aus einer Vielzahl (n) von Bildpunkte umfassenden Zeilen (3), die jeweils zu einem zueinander unterschiedlichen relativen Zeitpunkt (0, Tz, 2Tz, ...) innerhalb des dem Einzelbild zugeordneten Zeitintervalls erfasst und dem relativen Zeitpunkt zugeordnet sind, wobei jedem Bildpunkt der Einzelbilder eine Bildpunktposition (x, y) in einer Bildpunktebene mit einer ersten Bildpunktdimension (x) und einer zweiten Bildpunktdimension (y) zugeordnet ist;

Bereitstellen, in einem Bildbewegungsinformation-Speicher, einer Bildbewegungsinformation ($\Delta(B_{-1}, B_0)$, $\Delta(B_0, B_{-1})$), die einen Bewegungsfluss zwischen zeitlich aufeinanderfolgenden Einzelbildern der Bewegtbildsequenz als Vektorinformationen beschreibt;

Transformieren der Bewegtbildsequenz durch Wiederholen der Schritte, für die aufeinander folgenden Einzelbilder, zum:

Bilden einer einem zu behandelnden, aktuellen Einzelbild ($B_0$) der aufeinanderfolgenden Einzelbilder zugeordneten Transformationsbasis (1) mit der Bewegtbildsequenz-Zeitachse (21) als einer ersten Dimensionsachse und

einer den unterschiedlichen relativen Zeitpunkten (0, Tz, 2Tz, ....) entsprechenden Zeilenabfolge-Zeitachse (22) als einer zu der ersten Dimensionsachse

orthogonalen, zweiten Dimensionsachse durch Anordnen des aktuellen Einzelbildes ($B_0$), eines von dem aktuellen Einzelbild unterschiedlichen, und diesem zeitlich vorgelagerten, ersten Einzelbildes ($B_{-1}$) und eines von dem aktuellen Einzelbild und dem ersten Einzelbild unterschiedlichen, und diesen zeitlich nachgelagerten, zweiten Einzelbildes ($B_1$) in zeitlicher Reihenfolge der jeweiligen Startzeiten ($t_{-1}$, $t_0$, $t_1$) und Endzeiten ($t_0$, $t_1$, $t_2$) der Einzelbilder ($B_{-1}$, $B_0$, $B_1$) entlang der ersten Dimensionsachse (21), wobei die denselben relativen Zeitpunkten zugeordneten Zeilen (3) dieser Einzelbilder ($B_{-1}$, $B_0$, $B_1$) entlang der zweiten Dimension (22) zueinander benachbart angeordnet sind, und wobei die zweite Bildpunktdimension in Übereinstimmung mit der Zeilenabfolge-Zeitachse (22) ausgerichtet ist und die Transformationsbasis (1) eine dritte Dimension (x) umfasst, die zu der ersten (t) und zweiten (y) Dimension der Transformationsbasis orthogonal ist, wobei die Bildpunktebenen der Einzelbilder in der zur ersten Dimension (t) der Transformationsbasis orthogonalen Ebene angeordnet sind;

Verschieben mindestens eines Bildpunktes (P) des aktuellen Einzelbildes ($B_0$) von einer aktuellen Bildpunktposition (xP, yP) zu einer neuen Bildpunktposition (xQ, yQ) durch Ausführen, für einen jeweils zu verschiebenden Bildpunkt, der Schritte zum:

Bestimmen, für einen zu verschiebenden, aktuellen Bildpunkt (P) des aktuellen Einzelbildes ($B_0$), einer dem aktuellen Bildpunkt auf Grundlage der Bildbewegungsinformation ($\Delta(B_{-1}, B_0)$) zugeordneten ersten Bildpunktposition (xPL, yPL) in dem ersten Einzelbild ($B_{-1}$);

Bestimmen, für den aktuellen Bildpunkt (P) des aktuellen Einzelbildes ($B_0$), einer dem aktuellen Bildpunkt auf Grundlage der Bildbewegungsinformation ($\Delta(B_0, B_1)$) zugeordneten zweiten Bildpunktposition (xPR, yPR) in dem zweiten Einzelbild ($B_1$);

Ermitteln eines der Anfangszeit ($t_0$) des aktuellen Einzelbildes zugeordneten ersten Interpolationspunktes (S1) in der Transformationsbasis (1) auf Grundlage der bestimmten ersten Bildpunktposition (xPL, yPL) und der aktuellen Bildpunktposition (xP, yP), wobei

der erste Interpolationspunkt (S1) ermittelt wird auf Grundlage einer ersten Linie (7), die in der Transformationsbasis (1) durch die erste Bildpunktposition (xPL, yPL) und die aktuelle Bildpunktposition (xP, yP) läuft, und wobei

der erste Interpolationspunkt (S1) ermittelt wird als ein Schnittpunkt der ersten Linie (7) mit einer der Anfangszeit ($t_0$) des aktuellen Einzelbildes ($B_0$) zugeordneten, sich in der Transformationsbasis entlang der zweiten Dimension erstreckenden, Anfangszeitachse (15);

Ermitteln eines der Endzeit ($t_1$) des aktuellen Einzelbildes zugeordneten zweiten Interpolationspunktes (S2) in der Transformationsbasis (1) auf Grundlage der aktuellen Bildpunktposition (xP, yP) und der bestimmten zweiten Bildpunktposition (xPR, yPR), wobei der zweite Interpolationspunkt (S2) ermittelt wird auf Grundlage einer zweiten Linie (8), die in der Transformationsbasis (1) durch die aktuelle Bildpunktposition (xP, yP) und die zweite Bildpunktposition (xPR, yPR) läuft, und wobei der zweite Interpolationspunkt (S2) ermittelt wird als ein Schnittpunkt der zweiten Linie (8) mit einer der Endzeit ($t_1$) des aktuellen Einzelbildes ($B_0$) zugeordneten, sich in der Transformationsbasis entlang der zweiten Dimension erstreckenden, Endzeitachse (16);

Bestimmen einer neuen Bildpunktposition (xQ, yQ) des aktuellen Bildpunktes (P) des aktuellen Einzelbildes ($B_0$) auf Grundlage eines Mittelwertes der Positionen des ersten und des zweiten Interpolationspunktes (S1, S2); und

Erfassen einer Zuordnung des aktuellen Bildpunktes (P) und der bestimmten neuen Bildpunktposition (xQ, yQ) in einem Verschiebungsbildspeicher und/oder Transformations-Bewegtbildsequenzspeicher.

**2.** Verfahren gemäß Anspruch 1,
**dadurch gekennzeichnet,**
**dass** die erste Linie (7) und/oder die zweite Linie (8) durch eine jeweilige lineare, quadratische oder kubische Funktion bestimmt sind.

**3.** Verfahren gemäß einem der vorherigen Ansprüche,
**dadurch gekennzeichnet,**
**dass** die neue Bildpunktposition (yQ) des aktuellen Bildpunktes für die zweite Dimension (y) der Bildpunktebene als ein Mittelwert der Positionen des ersten (yS1) und zweiten (yS2) Schnittpunktes in der zweiten Dimension der Transformationsbasis bestimmt wird.

**4.** Verfahren gemäß einem der vorherigen Ansprüche,
**dadurch gekennzeichnet,**
**dass** die neue Bildpunktposition (xQ) des aktuellen Bildpunktes für die erste Dimension (x) der Bildpunktebene als ein Mittelwert der Positionen des ersten (xS1) und zweiten (xS2) Schnittpunktes in einer dritten Dimension der Transformationsbasis bestimmt wird.

**5.** Verfahren gemäß einem der vorherigen Ansprüche,
**dadurch gekennzeichnet,**
**dass** das Bestimmen der neuen Bildpunktposition des aktuellen Bildpunktes erfolgt durch ein Ermitteln, insbesondere durch ein Berechnen, eines ersten Korrekturversatzes ($\Delta$x) in der ersten Dimension der Bildpunktebene, der ermittelt wird auf Grundlage der ersten und zweiten Bildpunktposition jeweils in der ersten und zweiten Dimension der Bildpunktebene, der aktuellen Bildpunktposition nur in der zweiten Dimension der Bildpunktebene, und/oder durch ein Ermitteln, insbesondere durch ein Berechnen, eines zweiten Korrekturversatzes ($\Delta$y) in der zweiten Dimension der Bildpunktebene, der ermittelt wird auf Grundlage der ersten und zweiten Bildpunktposition nur in der zweiten Dimension der Bildpunktebene und der aktuellen Bildpunktposition nur in der zweiten Dimension der Bildpunktebene.

**6.** Verfahren gemäß Anspruch 5,
**dadurch gekennzeichnet,**
**dass** das Ermitteln des ersten ($\Delta$x) und/oder des zweiten ($\Delta$y) Korrekturversatzes ferner auf Grundlage einer vorbestimmten Geschwindigkeit (v), bevorzugt einer Zeilenabfolgegeschwindigkeit, und besonders bevorzugt einer Einzelbilderfassungsgeschwindigkeit oder einer Zeilenerfassungsgeschwindigkeit eines die zu transformierende Bewegtbildsequenz erfasst habenden CMOS-Sensors, und/oder einer vorbestimmten Zeilendimensionsgröße (h), bevorzugt des die zu transformierende Bewegtbildsequenz erfasst habenden CMOS-Sensors, erfolgt.

**7.** Verfahren gemäß einem der vorherigen Ansprüche,
**dadurch gekennzeichnet,**
**dass** die zweite Bildpunktdimension und die zweite Dimension der Transformationsbasis übereinstimmen.

**8.** Verfahren gemäß einem der vorherigen Ansprüche,
**dadurch gekennzeichnet,**
**dass** die Bildbewegungsinformation ($\Delta(B_{-1}, B_0)$) eine Veränderung von einer einem Einzelbildabschnitt, bevorzugt einem Bildpunkt, zugeordneten ersten Einzelabschnittposition in einem Einzelbild der Bewegtbildsequenz zu einer demselben Einzelbildabschnitt zugeordneten zweiten Einzelabschnittposition in einem zu dem Einzelbild zeitlich benachbarten Einzelbild, bevorzugt auf Grundlage einer Vektorinformation, beschreibt.

**9.** Verfahren nach einem der vorherigen Ansprüche,
**dadurch gekennzeichnet,**
**dass** das erste Einzelbild ($B_{-1}$) zu dem in der Bewegtbildsequenz folgenden, aktuellen Einzelbild ($B_0$) um einen ersten Einzelbildabstand von drei, bevorzugt von zwei Einzelbildern, und besonders bevorzugt von genau einem Einzelbild, beabstandet ist, und das zweite Einzelbild ($B_1$) zu dem, in der Bewegtbildsequenz vorhergehenden, aktuellen Einzelbild ($B_0$) um einen zweiten Einzelbildabstand von drei, bevorzugt von zwei Einzelbildern, und besonders bevorzugt von genau einem Einzelbild, beabstandet ist.

**10.** Anwendungsverfahren zur Bildentzerrung und Bildstabilisierung einer mit einem CMOS-Sensor aufgezeichneten Bewegtbildsequenz, **gekennzeichnet durch** ein Anwenden des Verfahrens gemäß einem der Ansprüche 1 bis 9 auf die aufgezeichnete Bewegtbildsequenz.

**11.** Bewegtbildsequenz-Transformationsvorrichtung, die ausgebildet ist zum Ausführen des Verfahrens gemäß einem der Ansprüche 1 bis 9.

**12.** Chip mit einer Hardware-Architektur, die zum Ausführen des Verfahrens gemäß einem der Ansprüche 1 bis 9 ausgebildet ist.

**13.** Kameraeinheit mit einem CMOS-Sensor, die ausgebildet ist zur Bildentzerrung und Bildstabilisierung, nach Abschluss einer Aufzeichnung einer Bewegtbildsequenz oder in Echtzeit während der Aufzeichnung, der mit dem CMOS-Sensor aufgezeichneten Bewegtbildsequenz mittels Anwenden des Verfahrens gemäß einem der Ansprüche 1 bis 9 auf die aufgezeichnete Bewegtbildsequenz.

**14.** Computerprogrammprodukt, insbesondere aufgezeichnet auf einem Datenträger, mit einem Programmcode zur Ausführung des Verfahrens gemäß einem der Ansprüche 1 bis 9 auf einem den Programmcode ausführenden Computer.

**Claims**

**1.** A method for transforming a moving-image squence captured using a CMOS sensor from individual images captured at a line-by-line temporal offset, in particular for image restitution and for image stabilization, having the following steps:

providing a moving-image sequence in a moving-image-sequence memory, said moving-image sequence having a plurality of individual images ($B_{-1}$, $B_0$, $B_1$) allocated to temporally consecutive time intervals ($\Delta T$), which are established by a corresponding start time ($t_{-1}$, $t_0$, $t_1$) and a corresponding end time ($t_0$, $t_1$, $t_2$), each individual image extending along a moving-image-sequence time axis (21) over a time interval and being put together from a plurality (n) of lines (3), which comprise image points and which are each captured at a relative point in time (0, Tz, 2Tz), which are different to each other, within the time interval allocated to the individual image and are allocated to the relative point in time, each image point of the individual images being allocated to an image-point position (x, y) in an image-point plane having a first image-point dimension (x) and a second image-point dimension (y);
providing image migration information ($\Delta(B_{-1}, B_0)$, $\Delta(B_0, B_1)$) in an image migration information memory, said image migration information describing a movement flow between temporally consecutive individual images of the moving-image sequence as vector information;
transforming the moving-image sequence by repeating the steps for the temporally consecutive individual images in order:

to form a transformation base (1), which is allocated to a current individual image ($B_0$) to be treated of the consecutive individual images and which has the moving-image-sequence time axis (21) as a first dimension axis and has a line-succession time axis (22) corresponding to the different relative points in time (0, Tz, 2Tz, ...) as a second dimension axis arranged orthogonal to the first dimension axis, by arranging the current individual image ($B_0$) and a first individual image ($B_{-1}$), which is different to and chronologically preceding the current individual image, as well as a second individual image ($B_1$), which is different to and chronologically succeeding the current individual image and the first individual image, in chronological order of the corresponding start times ($t_{-1}$, $t_0$, $t_1$) and corresponding end times ($t_0$, $t_1$, $t_2$) of the individual images ($B_{-1}$, $B_0$, $B_1$) along the first dimension axis (21), the lines (3) of these individual images ($B_{-1}$, $B_0$, $B_1$) allocated to the same relative points in time being arranged adjacent to one another along the second dimension (y), and said second image-point dimension being oriented in concordance with the line-succession time axis (22) and said transformation base (1) comprising a third dimension (x), which is orthogonal to the first (t) and second (y) dimension of the transformation base, said image-point levels of the individual images being arranged in the level arranged orthogonal to the first dimension (t) of the transformation base;
displacing at least one image point (P) of the current individual image ($B_0$) from a current image-point position (xP, yP) to a new image-point position (xQ, yQ) by executing the steps for each image point to be displaced in order:

to determine a first image-point position (xPL, yPL) in the first individual image ($B_{-1}$) for a current image point (P) to be displaced of the current individual image ($B_0$), said first image-point position (xPL, yPL) being allocated to the current image point based on the image migration information ($\Delta(B_{-1}, B_0)$);

to determine a second image-point position (xPR, yPR) in the second individual image (B$_1$) for the current image point (P) of the current individual image (B$_0$), said second image-point position (xPR, yPR) being allocated to the current image point based on the image migration information ($\Delta$(B$_0$, B$_1$));
to identify a first interpolation point (S1), which is allocated to the start time (t$_0$) of the current individual image, in the transformation base (1) based on the determined first image-point position (xPL, yPL) and the current image-point position (xP, yP), wherein
the first interpolation point (S1) is identified based on a first line (7), which passes through the first image-point position (xPL, yPL) and the current image-point position (xP, yP) in the transformation base (1),
and wherein
the first interpolation point (S1) is identified as an intersection of the first line (7) having a start-time axis (15) allocated to the start time (t$_0$) of the current individual image (B$_0$) and extending along the second dimension in the transformation base;
to identify a second interpolation point (S2), which is allocated to the end time (t$_1$) of the current individual image, in the transformation base (1) based on the current image-point position (xP, yP) and on the determined second image-point position (xPR, yPR), said second interpolation point (S2) being identified based on a second line (8), which passes through the current image-point position (xP, yP) and the second image-point position (xPR, yPR) in the transformation base (1), and said second interpolation point (S2) being identified as an intersection of the second line (8) having an end-time axis (16) allocated to the end time (t$_1$) of the current individual image (B$_0$) and extending along the second dimension in the transformation base;
to determine a new image-point position (xQ, yQ) of the current image point (P) of the current individual image (B$_0$) based on an average value of the positions of the first and the second interpolation point (S1, S2); and
to capture an allocation of the current image point (P) and the determined new image-point position (xQ, yQ) in a displacement image memory and/or a transformation-moving-image-sequence memory.

2. The method according to claim 1,
   **characterized in that**
   the first line (7) and/or the second line (8) are determined by a corresponding linear, square or cubic function.

3. The method according to any one of the preceding claims,
   **characterized in that**
   for the second dimension (y) of the image-point level, the new image-point position (yQ) of the current image point is determined as an average value of the positions of the first (yS1) and second (yS2) intersection in the second dimension of the transformation base.

4. The method according to any one of the preceding claims,
   **characterized in that**
   for the first dimension (x) of the image-point level, the new image-point position (xQ) of the current image point is determined as an average value of the positions of the first (xS1) and second (xS2) intersection in a third dimension of the transformation base.

5. The method according to any one of the preceding claims,
   **characterized in that**
   the new image-point position of the current image point is determined by identifying, in particular by calculating, a first corrective offset ($\Delta$x) in the first dimension of the image-point level, said first corrective offset ($\Delta$x) being identified based on the first and the second image-point position in the first and second dimension of the image-point level, respectively, and the current image-point position being determined only in the second dimension of the image-point level and/or by identifying, in particular by calculating, a second corrective offset ($\Delta$y) in the second dimension of the image-point level, said second corrective offset ($\Delta$y) being identified based on the first and second image-point position only in the second dimension of the image-point level and the current image-point position only being identified in the second dimension of the image-point level.

6. The method according to claim 5, **characterized in that** the first ($\Delta$x) and/or the second ($\Delta$y) corrective offset is further identified based on a predetermined speed (v), preferably a line-succession speed, and particularly preferably an individual-image capturing speed or a line capturing speed of a CMOS sensor having captured the moving-image sequence to be captured, and/or based on a predetermined line dimension size (h), preferably of the CMOS sensor

**EP 3 155 803 B1**

to have captured the moving-image sequence to be transformed.

7. The method according to any one of the preceding claims, **characterized in that** the second image-point dimension and the second dimension of the transformation base correspond with one another.

8. The method according to any one of the preceding claims, **characterized in that** the image migration information ($\Delta(B_{-1}, B_0)$) describes a change from a first individual section position, which is allocated to an individual image section, preferably an image point, in an individual image of the moving-image sequence to a second individual section position, which is allocated to the same individual image section, in an individual image temporally adjacent to the individual image, preferably based on a piece of vector information.

9. The method according to any one of the preceding claims, **characterized in that** the first individual image ($B_{-1}$) is distanced to the current individual image ($B_0$), which follows in the moving-image sequence, by a first individual-image distance of three, preferably two and particularly preferably exactly one, individual image(s) and **in that** the second individual image ($B_1$) is distanced to the current individual image ($B_0$), which is a preceding individual image ($B_0$) in the moving-image sequence, by a second individual-image distance of three, preferably two and particularly preferably exactly one, individual image(s).

10. An application method for image restitution and image stabilization of a moving-image sequence recorded with a CMOS sensor, **characterized by** applying the method according to any one of the claims 1 to 9 to the recorded moving-image sequence.

11. A moving-image-sequence transformation device, which is configured for executing the method according to any one of the claims 1 to 9.

12. A chip having a hardware architecture, which is configured for executing the method according to any one of the claims 1 to 9.

13. A camera unit having a CMOS sensor, said camera unit being configured for image restitution and image stabilization of a moving-image sequence recorded with the CMOS sensor after termination of a recording of a moving-image sequence or in real time during the recording by applying the method according to any one of the claims 1 to 9 to the recorded moving-image sequence.

14. A computer program product, in particular recorded on a data carrier, having a programming code for executing the method according to any one of the claims 1 to 9 on a computer executing the programming code.

**Revendications**

1. Procédé pour la transformation d'une séquence d'images animées enregistrée en utilisant un capteur CMOS des images individuelles enregistrées à un décalage temporel de manière ligne par ligne, en particulier pour la restitution des images et pour la stabilisation des images, ayant les étapes suivantes :

mise à disposition une séquence d'images animées dans une mémoire de séquence d'images animées, ladite séquence d'images animées ayant une pluralité d'images individuelles ($B_{-1}$, $B_0$, $B_1$) attribuées à des intervalles de temps ($\Delta T$) temporellement consécutives, qui sont établies par un début ($t_{-1}$, $t_0$, $t_1$) correspondant et un fin ($t_0$, $t_1$, $t_2$) correspondant, chaque image individuelle s'étendant le long d'un axe de temps de la séquence d'images animées (21) pour une intervalle de temps et étant composant d'une pluralité (n) de lignes (3), qui comprennent des points d'image et qui sont chacune enregistrées à un instant relatif (0, Tz, 2Tz), qui sont différents les uns des autres,
dans l'intervalle de temps attribuée à l'image individuelle et sont attribués à l'instant relatif, chaque point d'image des images individuelles étant attribué à une position de point d'image (x, y) dans un niveau de point d'image ayant une première dimension de point d'image (x) et une deuxième dimension de point d'image (y) ;
mise à disposition d'une information de mouvement d'images ($\Delta(B_{-1}, B_0)$, $\Delta(B_0, B_1)$) dans une mémoire d'informations de mouvement d'images, ladite information de mouvement d'images décrivant un flux de mouvement entre des images individuelles temporellement consécutives de la séquence d'images animées comme information vectorielle ;
transformation de la séquence d'images animées en répétant les étapes pour les images individuelles tempo-

**14**

rellement consécutives afin de :

former une base de transformation (1), qui est attribuée à une image individuelle ($B_0$) actuelle à être traitée des images individuelles consécutives et qui a un axe de temps de la séquence d'images animées (21) comme un premier axe de dimension et a un axe de temps de succession de ligne (22) correspondant aux instants relatifs (0, Tz, 2Tz, ...) différents comme un deuxième axe de dimension disposé orthogonal au premier axe de dimension, en disposant l'image individuelle ($B_0$) actuelle et une première image individuelle ($B_{-1}$) différente de et précédant chronologiquement l'image individuelle actuelle ainsi qu'une deuxième image individuelle ($B_1$) différente de et chronologiquement suivante la première image individuelle et la première image individuelle par ordre chronologique des débuts ($t_{-1}$, $t_0$, $t_1$) correspondants et des fins ($t_0$, $t_1$, $t_2$) correspondants des images individuelles ($B_{-1}$, $B_0$, $B_1$) le long de l'axe de dimension (21), lesdites lignes (3) de ces images individuelles ($B_{-1}$, $B_0$, $B_1$) attribuées aux mêmes instants relatifs étant disposées adjacentes les unes aux autres le long de la deuxième dimension (y), et ladite dimension de point d'image étant orientée en conformité avec l'axe de temps de la succession de ligne (22) et

ladite base de transformation (1) comprenant une troisième dimension (x), qui est orthogonale à la première (t) et à la deuxième (y) dimension de la base de transformation, lesdits niveaux de point d'images des images individuelles étant disposés dans le niveau disposé orthogonal à la première dimension (t) de la base de transformation ;

déplacer au moins un point d'image (P) de l'image individuelle ($B_0$) actuelle d'une position de point d'image (xP, yP) actuelle vers une nouvelle position de point d'image (xQ, yQ) en exécutant les étapes pour chaque point d'image à être déplacé afin de :

déterminer une première position de point d'image (xPL, yPL) dans la première image individuelle ($B_{-1}$) pour un point d'image (P) actuel à être déplacé de l'image individuelle ($B_0$) actuelle, ladite première position de point d'image (xPL, yPL) étant attribuée au point d'image actuel sur la base de l'information de mouvement d'image ($\Delta(B_{-1}, B_0)$) ;

déterminer une deuxième position de point d'image (xPR, yPR) dans la deuxième image individuelle ($B_1$) pour le point d'image (P) actuel de l'image individuelle ($B_0$) actuelle, ladite deuxième position de point d'image (xPR, yPR) étant attribuée au point d'image actuel sur la base de l'information de mouvement d'image ($\Delta(B_0, B_1)$) ;

identifier un premier point d'interpolation (S1), qui est attribué au début ($t_0$) de l'image individuelle actuelle, dans la base de transformation (1) sur la base de la première position de point d'image (xPL, yPL) déterminée et sur la base de la position de point d'image (xP, yp), dans lequel

le premier point d'interpolation (S1) est identifié sur la base d'une première ligne (7), qui passe par la première position de point d'image (xPL, yPL) et par la position de point d'image (xP, yP) actuelle dans la base de transformation (1),

et dans lequel

le premier point d'interpolation (S1) est identifié comme un point d'intersection de la première ligne (7) ayant un axe de temps de début (15) attribué au début ($t_0$) de l'image individuelle ($B_0$) actuelle et s'étendant le long de la deuxième dimension dans la base de transformation ;

identifier un deuxième point d'interpolation (S2), qui est attribué au fin ($t_1$) de l'image individuelle actuelle, dans la base de transformation (1) sur la base de la position de point d'image (xP, yP) actuelle et sur la base de la deuxième position de point d'image (xPR, yPR) déterminée, ladite deuxième point d'interpolation (S2) étant identifiée sur la base d'une deuxième ligne (8), qui passe par la position de point d'image (xP, yP) actuelle et par la deuxième position de point d'image (xPR, yPR) dans la base de transformation (1), et ledit deuxième point d'interpolation (S2) étant identifié comme un point d'intersection de la deuxième ligne (8) ayant un axe de temps de fin (16) attribué au fin ($t_1$) de l'image individuelle ($B_0$) actuelle et s'étendant le long de la deuxième dimension dans la base de transformation ;

déterminer une nouvelle position de point d'image (xQ, yQ) du point d'image (P) actuel de l'image individuelle ($B_0$) actuelle sur la base d'une valeur moyenne des positions du premier et du deuxième point d'interpolation (S1, S2) ; et

enregistrer une attribution du point d'image (P) actuel et de la nouvelle position de point d'image (xQ, yQ) déterminée dans une mémoire d'image de déplacement et/ou dans une mémoire de séquence d'images animées de transformation.

2. Procédé selon la revendication 1,
   **caractérisé en ce que**
   la première ligne (7) et/ou la deuxième ligne (8) sont déterminées par une fonction correspondante linéaire, quadratique ou cubique.

3. Procédé selon l'une quelconque des revendications précédentes,
**caractérisé en ce que**
pour la deuxième dimension (y) du niveau de point d'image, la nouvelle position de point d'image (yQ) du point d'image actuel est déterminée comme une valeur moyenne des positions du premier (yS1) et du deuxième (yS2) point d'intersection dans la deuxième dimension de la base de transformation.

4. Procédé selon l'une quelconque des revendications précédentes,
**caractérisé en ce que**
pour la première dimension (x) du niveau de point d'image, la nouvelle position de point d'image (xQ) du point d'image actuel est déterminée comme une valeur moyenne des positions du premier (xS1) et du deuxième (xS2) point d'intersection dans une troisième dimension de la base de transformation.

5. Procédé selon l'une quelconque des revendications précédentes,
**caractérisé en ce que**
la nouvelle position de point d'image du point d'image actuel est déterminée par l'identification, en particulier par computation, d'un premier décalage correctif ($\Delta x$) dans la première dimension du niveau de point d'image, ledit premier décalage correctif ($\Delta x$) étant identifié sur la base de la première et de la deuxième position de point d'image dans la première et dans la deuxième dimension du niveau de point d'image, respectivement, et la position de point d'image actuelle n'étant que déterminée dans la deuxième dimension du niveau de point d'image, et/ou par l'identification, en particulier par computation, d'un deuxième décalage correctif ($\Delta y$) dans la deuxième dimension du niveau de point d'image, ledit deuxième décalage correctif ($\Delta y$) étant identifié sur la base de la première et de la deuxième position de point d'image seulement dans la deuxième dimension du niveau de point d'image et la position de point d'image actuelle n'étant qu'identifiée dans la deuxième dimension du niveau de point d'image.

6. Procédé selon la revendication 5,
**caractérisé en ce que**
le premier ($\Delta x$) et/ou le deuxième ($\Delta y$) décalage correctif est identifie en outre sur la base d'une vitesse (v) prédéterminée, de préférence une vitesse de succession de ligne, et de préférence particulière une vitesse d'enregistrement des images individuelles ou une vitesse d'enregistrement de ligne d'un capteur CMOS qui a enregistré la séquence d'images animées à être enregistrée, et/ou sur la base d'une taille (h) de dimension de ligne prédéterminée, de préférence du capteur CMOS qui a enregistré la séquence d'images animées à être transformée.

7. Procédé selon l'une quelconque des revendications précédentes,
**caractérisé en ce que**
la deuxième dimension de point d'image et la deuxième dimension de la base de transformation correspondent les unes aux autres.

8. Procédé selon l'une quelconque des revendications précédentes,
**caractérisé en ce que**
l'information de mouvement d'image ($\Delta(B_{-1}, B_0)$) décrive un changement d'une première position de section individuelle, qui est attribuée à une section d'image individuelle, préférablement à un point d'image, dans une image individuelle de la séquence d'images animées en une deuxième position de section individuelle, qui est attribuée à la même section d'image individuelle, dans une image individuelle temporellement adjacente à l'image individuelle, de préférence sur la base de l'information vectorielle.

9. Procédé selon l'une quelconque des revendications précédentes,
**caractérisé en ce que**
la première image individuelle ($B'_{-1}$) est espacée à l'image individuelle ($B_0$) actuelle, qui suive dans la séquence d'images animées, par une première distance d'image individuelle de trois, de préférence deux et de préférence particulière exactement une, images individuelles et **en ce que** la deuxième image individuelle ($B_1$) est espacée à l'image individuelle ($B_0$) actuelle, qui est une image individuelle ($B_0$) précédente dans la séquence d'images animées, par une deuxième distance d'image individuelle de trois, de préférence deux et de préférence particulière exactement une, images individuelles.

10. Procédé d'application pour la restitution des images et pour la stabilisation des images d'une séquence d'images animées enregistrée en utilisant un capteur CMOS, **caractérisé par** l'application du procédé selon l'une quelconque des revendications 1 à 9 sur la séquence d'images animées enregistrée.

11. Dispositif de transformation de la séquence d'images animées, qui est configuré pour exécuter le procédé selon l'une quelconque des revendications 1 à 9.

12. Puce ayant une architecture matérielle, qui est configurée pour exécuter le procédé selon l'une quelconque des revendications 1 à 9.

13. Unité de camera ayant un capteur CMOS, ladite unité de camera étant configurée pour la restitution des images et pour la stabilisation des images de la séquence d'images animées enregistrée avec le capteur CMOS avant la terminaison d'un enregistrement d'une séquence d'images animées ou en temps réel pendant l'enregistrement au moyens de l'application du procédé selon l'une quelconque des revendications 1 à 9 sur la séquence enregistrée d'images animées.

14. Produit de programme informatique, en particulier enregistré sur un support de données, ayant un code de programmation pour exécuter le procédé selon l'une quelconque des revendications 1 à 9 sur un ordinateur exécutant le code de programmation.

Fig. 1

Fig. 2

```
                                                                    S1
┌──────────────────────────────────────────────────────────────┐
│  Start: Zeiger i für aktuelles Einzelbild auf Anfangswert      │
│  setzen:   i:= 0                                                │
└──────────────────────────────────────────────────────────────┘
                              │
                              ▼
                                                                   S10
┌──────────────────────────────────────────────────────────────┐
│  Lesen von drei aufeinanderfolgenden Einzelbildern             │
│  $B_{-1+i}$, $B_{0+i}$ und $B_{1+i}$ aus Bewegtbildsequenz-    │
│  Speicher                                                      │
└──────────────────────────────────────────────────────────────┘
                              │
                              ▼
                                                                   S20
┌──────────────────────────────────────────────────────────────┐
│  Lesen von Bildbewegungsinformation-Datensätzen               │
│  $\Delta(B_{-1+i}, B_{0+i})$ und $\Delta(B_{0+i}, B_{1+i})$    │
│  der aufeinanderfolgenden Einzelbilder $B_{-1+i}$, $B_{0+i}$   │
│  und $B_{1+i}$ aus Bildbewegungsinformation-Speicher           │
└──────────────────────────────────────────────────────────────┘
                              │
                              ▼
                                                                   S30
┌──────────────────────────────────────────────────────────────┐
│  Bilden einer Transformationsebene durch Anordnen der          │
│  Einzelbilder $B_{-1+i}$, $B_{0+i}$ und $B_{1+i}$ in ihrer      │
│  zeitlichen Reihenfolge in einer Ebene einer ersten            │
│  Dimension (= Bewegtbildsequenz-Zeitachse) und einer           │
│  zweiten Dimension (= Zeilenabfolge-Zeitachse)                 │
└──────────────────────────────────────────────────────────────┘
                              │
                              ▼
                                                                   S40
┌──────────────────────────────────────────────────────────────┐
│  Verschieben der Bildpunkte des Einzelbildes $B_{0+i}$ von     │
│  einer jeweiligen bildpunktspezifischen aktuellen              │
│  Bildpunktposition (xP, yP) zu einer neuen                     │
│  Bildpunktposition (xQ, yQ)                                    │
└──────────────────────────────────────────────────────────────┘
                              │
                              ▼
                                                                   S50
┌──────────────────────────────────────────────────────────────┐
│  Zeiger i für aktuelles Einzelbild inkrementieren:  i:= i+1    │
└──────────────────────────────────────────────────────────────┘
```

Fig. 3

**S40**

**S41**
Auswählen, im aktuellen Einzelbild $B_{0+i}$, von zu verschiebendem Bildpunkt P mit Position (xP, yP)

**S42**
Bestimmen einer Position (xPL, yPL) im Vorläuferbild $B_{-1+i}$ auf Grundlage von Bildbewegungsinformation $\Delta(B_{-1+i}, B_{0+i})$ für Übergang (Vorläuferbild, aktuelles Einzelbild)

**S43**
Bestimmen einer Position (xPR, yPR) im Nachfolgerbild $B_{1+i}$ auf Grundlage von Bildbewegungsinformation $\Delta(B_{0+i}, B_{1+i})$ für Übergang (aktuelles Einzelbild, Nachfolgerbild)

**S44**
Schnittpunkt (xS1, yS1) von Linie (xPL, yPL)-(xP, yP) mit $t_0$-Achse ermitteln

**S45**
Schnittpunkt (xS2, yS2) von Linie (xP, yP)-(xPR, yPR) mit $t_1$-Achse ermitteln

**S46**
Neue Position (xQ, yQ) bestimmen als:

xQ := (xS1+xS2)/2

yQ := (yS1+yS2)/2

**S49**
Bestimmte, neue Position (xQ, yQ) dem Bildpunkt P in Speicher zuordnen

Fig. 4

S40

S41

Auswählen, im aktuellen Einzelbild $B_{0+i}$, von zu verschiebendem Bildpunkt P mit Position (xP, yP)

S42

Bestimmen einer Position (xPL, yPL) im Vorläuferbild $B_{-1+i}$ auf Grundlage von Bildbewegungsinformation $\Delta(B_{-1+i}, B_{0+i})$ für Übergang (Vorläuferbild, aktuelles Einzelbild)

S43

Bestimmen einer Position (xPR, yPR) im Nachfolgerbild $B_{1+i}$ auf Grundlage von Bildbewegungsinformation $\Delta(B_{0+i}, B_{1+i})$ für Übergang (aktuelles Einzelbild, Nachfolgerbild)

S47

Neue Position (xQ, yQ) bestimmen als:

xQ := xP + $\Delta$x

yQ := yP + $\Delta$y

S49

Bestimmte, neue Position (xQ, yQ) dem Bildpunkt P in Speicher zuordnen

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2009160957 A1

- US 2011267514 A1

**In der Beschreibung aufgeführte Nicht-Patentliteratur**

- Determining optical flow. *Artifical Intelligence,* 1981, vol. 17 (1-3), 185-203

- **B.D. LUCAS ; T. KANADEM.** An iterative image registration technique with an application to stereo vision. *Proceedings of Imaging understanding workshop,* 1981, 121-130